# EUROPEAN PATENT APPLICATION

(11) **EP 1 760 811 A1**
(43) Date of publication of application: **07.03.2007**
(21) Application number: 05734011.9
(22) Date of filing: 25.04.2005
(51) Int. Cl.: H01M 8/02, H01M 8/10

(54) **FUEL CELL AND METHOD FOR MANUFACTURING FUEL CELL**

(30) Priority: 26.04.2004 JP 2004129862
(71) Applicant: Toshiba Fuel Cell Power Systems Corporation, 1-1, Shibaura 1-chome, Minato-ku Tokyo 1058001 (JP)
(72) Inventor: OGAMI, Yasuji., Toshiba Fuel Cell Power Syst Co, Tokyo 105-8001 (JP); AOKI, Nobuo., Toshiba Fuel Cell Power Syst Co, Tokyo 105-8001 (JP); SUZUKI, Naotoshi., Toshiba Fuel Cell Power Syst Co, Tokyo 105-8001 (JP)
(74) Representative: Henkel, Feiler & Hänzel
(86) International application number: PCT/JP2005/007830
(87) International publication number: WO 2005/104280

(57) **Abstract**

A fuel cell is provided, in which the generation of hydrogen, which is one cause of degradation of the cell characteristics, is controlled, thus preventing the degradation of the electrolyte member and maintaining stable cell characteristics for a long time. The fuel cell has an anode (2), a cathode (1) opposed to the anode (2), and an electrolyte member (3) arranged between the anode (2) and the cathode (1) and having ion conductivity. The electrolyte member (3) comprises three layers, i.e., a first electrolyte layer (3A) and two second electrolyte layers (3B). The first electrolyte layer (3A) is interposed between the second electrolyte layers (3B). The second electrolyte layer (3B) contacts the anode (2) and the cathode (1) and is a layer that prevents the permeation of oxygen from the cathode (1) to the anode (2). The second electrolyte layer (3B) contains catalyst.

## Description

### Technical Field

The present invention relates to a fuel cell in which the generation of hydrogen peroxide is one cause of degradation of the cell characteristic, and a method of manufacturing a fuel cell.

### Background Art

A fuel-cell power-generating system is an apparatus in which fuel such as hydrogen electrochemically reacts with oxidizer such as air, to convert the chemical energy of the reactant gases to electric energy. The electrochemical reaction produces water only. Therefore, this system is expected to be a clean power generator.

The fuel-cell power generating system that utilizes such pollution-free energy incorporates a fuel-cell main unit. The fuel-cell main unit is composed of a fuel-cell stack and two reactant-gas supplying manifolds provided on the sides of the fuel-cell stack, respectively. The fuel-cell stack comprises a plurality of cell units. Each cell unit has a unit cell, a fuel supplying separator, an oxidizer supplying separator, and a coolant supplying separator. The unit cell comprises an anode, a cathode, and an electrolyte layer. The anode and the cathode are opposed to each other. The electrolyte layer is interposed between the anode and the cathode and can conduct ions. The fuel supplying separator and the oxidizer supplying separator are made of electrically conductive material and inhibit gas from permeating. The fuel supplying separator has a reactant-gas supplying groove (i.e., fuel supplying groove), and the oxidizer supplying separator has a reactant-gas supplying groove (i.e., oxidizer supplying groove). The coolant supplying separator has a coolant supplying groove. The reactant-gas supplying manifolds supply reactant gases to the reactant-gas supplying grooves of each cell unit.

In the fuel-cell main unit, water may be supplied directly to the reactant-gas supplying grooves. In this case, no coolant supplying separator may be inserted. If liquid such as methanol is used as fuel, the fuel-cell main unit can have the same configuration, though the liquid replaces the reactant gas.

In the fuel-cell main unit so configured, the reactant gases are supplied to the fuel supplying groove and the oxidizer supplying groove. The electrochemical reaction specified below proceeds between the electrodes of each cell unit. As a result, electromotive force develops between the electrodes.

At anode: 2H₂ → 4H+ + 4e⁻ (1)

At cathode: O₂ + 4H⁺ + 4e⁻ → 2H2O (2)

At the anode, the hydrogen gas supplied is dissociated into hydrogen ions and electrons, as shown in the formula (1). (That is, a hydrogen-oxidation reaction takes places.) The hydrogen ions moves to the cathode through the electrolyte, while the electrons move to the cathode through an external circuit.

At the cathode, the oxygen in the oxidizer supplied and the hydrogen ions react with the electrons electrochemically as shown in the formula (2). (Oxygen-reduction reaction takes place). As a result, water is generated. The electrons permeating through the external circuit is used as a current. Thus, electric power can be supplied.

The water generated in the reactions of the formulae (1) and (2) is discharged outside the fuel-cell main unit through the reactant-gas discharging manifolds, together with the reactant gas not consumed in the fuel-cell main unit.

Fuel cells are classified into alkali type, phosphoric acid type, solid polymer type, melting carbonate type, and solid oxide type, in accordance with the kind of electrolyte used.

Of these fuel cells, the solid polymer type, which uses solid polyelectrolyte membrane (hereinafter referred to as electrolyte membrane) as electrolyte layer, can work at comparatively low temperatures. It has short warming-up time and exhibits high power density. Therefore, it is receiving much attention as an element of a stationary power supply, an in-vehicle power supply or a portable power supply.

The electrolyte membrane of the solid polymers type fuel cell, which calls attention, is perfluorocarbon sulfonate membrane about 10 to 100 microns thick, for example, Nafion (trade name, manufactured by E. I. du Pont de Nemours & Co.).

This electrolyte membrane has a reactant-gas isolating function of isolating fuel and oxidizer and an ion-transporting function of transporting hydrogen ions generated at anodes to cathodes. It excels in hydrogen-ion conductivity. The electrolyte membrane indeed has high hydrogen-ion conductivity when it contains much water. When sts water content decreases, however, its hydrogen-ion conductivity falls remarkably. Therefore, the electrolyte membrane must be maintained wet. If its water content is too high, however, the reactant gas will easily pass through it. (Crossing leak or crossover will take place). If this happens, the reactant gas reaching the counter pole will increase in amount.

As is known in the art, the reactant gas permeating, even in a small amount, through the electrolyte membrane results in a decrease in the cell voltage during the operation of the fuel cell of solid polymer type. It is therefore important to prevent the crossing leak of reactant gas. Particularly, the crossing leak of fuel, from the anode to the cathode hinders the oxygen-reduction reaction shown in the formula (2) of a cathode. Consequently, the cell voltage decreases.

A technique is known, which controls the crossing leak of reactant gas in the electrolyte membrane. In this technique, the reactant gas permeated through the electrolyte membrane is made to react within a solid polymer membrane. This solid polymer membrane contains metal catalyst, such as platinum, dispersed in it. (See Patent Document 1.) The technique disclosed in Patent Document 1 is devised to prevent the crossing leak of reactant gas. The fuel and the oxidizer are made to react within the solid polymer membrane, generating water in the membrane. Thus, the membrane is rendered wet. According to Patent Document 1, the solid polymer membrane can be rendered wet, can be made thin and can prevent the permeation of the reactant gas, and a fuel cell of higher performance can therefore be provided.

There is another technique of arranging a thin membrane made of catalyst, oxide and polyelectrolyte on a cathode (see Patent Documents 2). According to Patent Document 2, hydrogen gas coming from an anode through an electrolyte membrane is made to react with oxygen in the thin membrane made of catalyst, oxide and polyelectrolyte and arranged on the cathode, thereby to prevent the cell performance from degrading.

An electrolyte membrane contains and holds catalyst is known. This membrane has an intermediate part that contains particles that support metal catalyst, in order to promote the self-generation water in the electrolyte membrane efficiently while the fuel cell is operating. (See Patent Document 3.) According to Patent Documents 3, a minimum amount of metal catalyst, required, is effectively utilized, thereby to provide an electrolyte-electrode unit that exhibits high proton conductivity while the fuel cell is operating. Besides the above-mentioned known techniques, there are known various modified catalyst layers. (See Patent Documents 4, 5, 6 and 7.)

The decrease in the fuel cell voltage is studied from various viewpoints n recent researches.

For example, Inaba et al. have reported that a sub-reaction of the following formula (3) takes places during the oxygen-reduction reaction of the formula (2), which proceeds at the cathode, produces hydrogen peroxide (H₂O₂), that the hydrogen peroxide promotes decomposition of the electrolyte membrane. The heat locally generated as the reactant gas passes through the electrolyte membrane degrades the electrolyte membrane, and the performance of the fuel cell inevitably decreases (See Patent Document 1).

O² + 2H⁺ + 2e⁻ H₂O₂→ H₂O₂ (3)

However, no effective measures against the degradation electrolyte membrane degradation have bee proposed yet.
Pat. Doc. 1: Jpn. Pat. Appln. KOKAI Publication No. 7-90111
Pat. Doc. 2: Jpn. Pat. Appln. KOKAI Publication No. 2003-86192
Pat. Doc. 3: Jpn. Pat. Appln. KOKAI Publication No. 2003-59511
Pat. Doc. 4: Japnese Patent No. 3411897
Pat. Doc. 5: Jpn. Pat. Appln. KOKAI Publication No. 2003-59507
Pat. Doc. 6: Jpn. Pat. Appln. KOKAI Publication No. 2004-6306
Pat. Doc. 7: Jpn. Pat. Appln. KOKAI Publication No. 2002-542590
Non-pat. Doc. 1: Inaba et al. "Generation of Hydrogen Peroxide at PEFC Air Pole and the Influence on Nafion," Proceedings, 10th Symposium on Fuel Cells, pp. 261 - 264, 2003

### Disclosure of Invention

As indicated above, if hydrogen from the anode passes through an electrolyte membrane to a cathode as mentioned above, the oxygen-reduction reaction at the cathode will be hindered, and the cell voltage will consequently decrease. Various measures have been proposed against such a decrease of cell voltage.

The present inventors have noted that that the generation of hydrogen peroxide accelerates the degradation of an electrolyte membrane. They have also acquired the following new knowledge in their recent research. That is, crossing leak of reactant gas, if any, may accelerate the generation of hydrogen peroxide. Further, the inventors have found that the lower the potential of the electrode catalyst layer, and the higher the oxygen concentration, the more the amount of hydrogen peroxide (H₂O₂) generated. The condition for this is the crossing leak of oxygen from the cathode to the anode in the fuel cell. It was found that the cross leak of oxygen through the electrolyte membrane from the cathode to the anode having low potential may promote the generation of hydrogen peroxide in a large amount at the catalyst layer of the anode. It was also found that the hydrogen peroxide thus generated promotes the degradation of the electrolyte membrane. In view of this, the inventors have been convinced that it is important to prevent oxygen from permeating from the cathode to the anode in order to control the generation of hydrogen peroxide that accelerates the degradation of the electrolyte membrane.

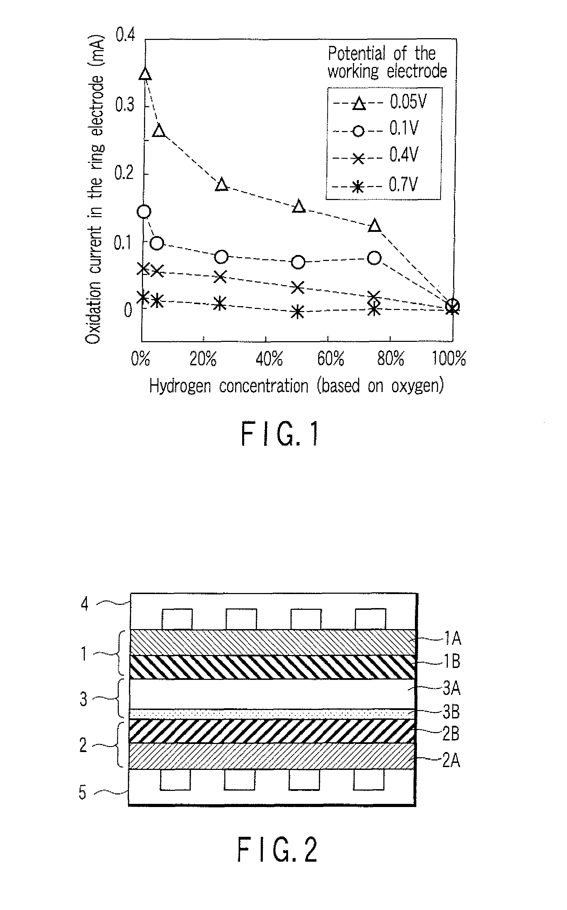

Hereafter, some data and some finding, which the inventors have acquired in their research, with regard to the speed at which hydrogen peroxide is generated will be described. FIG. 1 is a graph showing the current supplied, causing oxygen-reduction reaction initiated by two-electron reaction, using the potential of the working electrode and the hydrogen concentration in the gas supplied, as parameters. In the test, the rotary ring-disc electrode (RRDE) method was employed. The oxygen-reduction current generated by two-electronic reaction was measured with a ring electrode, using as a parameter the concentration of hydrogen in the oxygen-based gas supplied to the working electrode (i.e., disc electrode) set at various potentials was made into the parameter.

The test conditions were as follows. In the rotary ring-disc electrode method, the ring-disc electrode composed of a disc electrode and a ring electrode fixed to the circumference of the disc was rotated in a vessel filled with electrolytic liquid. The solution was thereby stirred, and the electrolyte was transported from the solution bulk to the disc electrode, and thence to the ring electrode. As the electrolyte was so transported, the disc electrode and the ring electrode were associated. The rotary ring-disc electrode method is a method that acquires, base on such a principle, information about the product or intermediate product of electrode reaction.

The experiment conditions were as follows:
Electrolytic solution: 0.5-mol aqueous solution of sulfuric acid
Working electrode: Platinum rotary ring-disc electrode
Counter pole: Platinum wire
Rotational speed of electrode: 1500 rpm
Measured at: Room temperature (25°C)
Reference potential: Reversible hydrogen electrode potential
Gas supplied: Mixture of pure hydrogen and pure oxygen (Forced into the electrolytic solution)
Parameters: Gas composition (ratio of oxygen to hydrogen) and the potential of the working electrode

In FIG. 1, plotted on the ordinate is the current (oxidation current) that flowed in the ring electrode when the hydrogen peroxide generated at the working electrode by two-electronic reaction of the formula (3) is oxidized. This current serves as index of the amount of hydrogen peroxide generated.

The larger the aforementioned current, the faster hydrogen peroxide will be generated. The mixing ratio between hydrogen and oxygen is plotted on the abscissa. The oxygen concentration increases toward the left-hand side. The hydrogen concentration increases toward the right-hand side. Each symbol shows the potential of the working electrode in each measurement.

As evident from FIG. 1, the higher the oxygen concentration at each potential, the faster hydrogen peroxide will be generated. For the same gas composition, the lower the electrode potential, the faster hydrogen peroxide will be generated. If the electrode potential is low and the oxygen concentration is high, hydrogen peroxide will be generated at the highest speed.

The electrode potential of the anode which generally supplies hydrogen gas in operation in the fuel cell is as low as about 0.03 V. On the other hand, the potential of the cathode that supplies oxidizer (i.e., air) is as high as 0.7 V or more. The data of FIG. 1, obtained from the above-mentioned test that used a rotary ring-disc electrode shows that, the speed at which hydrogen peroxide is generated at the cathode having high potential is comparatively low even if hydrogen mixes with oxygen due to the crossing leak of hydrogen from the anode. The data also shows that the speed at which hydrogen peroxide is generated at the anode having low potential will abruptly increase if oxygen mixes with hydrogen due to crossing leak of oxygen from the cathode.

In view of the above experimental results, it is very important to prevent the oxygen from flowing from the cathode to the anode in order to control the generation of hydrogen peroxide, which accelerates the degradation of the electrolyte membrane. Hitherto, techniques of controlling the crossing leak of the reactant gas permeating through the electrolyte membrane, for the purpose of preventing oxygen-reduction reaction at the cathode, have been proposed. These techniques do not aim at stabilizing the battery performance by controlling the above-mentioned generation of hydrogen peroxide. These techniques are not so effective and should be improved in some respects.

For example, Patent Documents 1 and 2 disclose related techniques.

With the techniques disclosed in Patent Documents 1, the metal catalyst, such as platinum, must be dispersed in the whole electrolyte membrane. This raises a problem. The concentration of the catalyst thus distributed must be so high that the permeation of oxygen through the electrolyte membrane may be reliably controlled. Hence, the catalyst must be used in a relatively large amount. The electrical insulation of the electrolyte membrane decreases because the catalyst is electrically conductive. The risk of short circuit of the anode and the cathode inevitably increases.

Hydrophilic material other than the metal catalyst, which is added to raise the water-holding property of the electrolyte membrane, is preferably not electrically insulating. If electrically conductive material, such as carbon, is added, the risk of short circuit will increase further. Since the electrolyte membrane itself is made of resin, its thermal conductivity is very low. If heat is generated in the electrolyte membrane disclosed in Patent Document 1 as the fuel and oxygen undergoes reaction, the heat will be accumulated in the electrolyte membrane, raising the temperature in the inner part of the membrane. This temperature rise, which is prominent if the membrane is thick, may accelerate the degradation of the electrolyte membrane.

In the technique disclosed in Patent Documents 2, the thin layer composed of catalyst, oxide and polyelectrolyte functions as a part of a cathode. That is, this thin layer is a second catalyst layer that assists the function of the catalyst layer. Since the electrolyte membrane cannot prevent the permeation of the reactant gas, the hydrogen gas will react with oxygen gas in the second catalyst layer, i.e., by the catalyst composed of catalyst, oxide and polyelectrolyte. In the technique disclosed in Patent Document 1, the hydrogen that has permeated is consumed in the thin layer made of catalyst, oxide and polyelectrolyte. Therefore, any function of preventing the permeation of oxygen cannot be expected of this layer.

On the other hand, if the hydrogen gas and the oxygen gas undergo direct reaction at the cathode, the reaction of the formula (3) and the oxygen-reduction reaction of the formula (2) will be promoted simultaneously. In this case, hydrogen peroxide may be generated at the cathode.

As seen from the foregoing, in the technique disclosed in Patent Document 2, the electrolyte membrane cannot be prevented from degrading because the hydrogen that has permeated through the electrolyte membrane reacts with the oxygen in the thin membrane made of catalyst. Consequently, the performance of the fuel cell decreases.

Accordingly, an object of the present invention is to provide a fuel cell in which the permeation of oxygen from the cathode to the anode can be effectively prevented, thereby controlling the generation of hydrogen and preventing the degradation of the electrolyte membrane, and which can therefore maintain stable cell characteristics for a long time, and also to provide a method of manufacturing a fuel cell.

To achieve this object, an invention corresponding to claim 1 is a fuel cell having an anode, a cathode opposed to the anode, and an electrolyte member arranged between the anode and the cathode and having ion conductivity, characterized in that the electrolyte member comprises a plurality of electrolyte layers, one of the electrolyte layers, which contacts at least one of the anode and the cathode, is a layer which prevents permeation of oxygen from the cathode to the anode and which contains catalyst.

### Brief Description of Drawings

FIG. 1 is a graph representing the relation of the current flowing in a ring electrode when hydrogen peroxide is oxidized, to the potential of a working electrode and the hydrogen concentration in supplied gas, which are used as parameters;
FIG. 2 is a sectional view showing one of unit cells of a fuel cell according to Embodiment 1 of this invention;
FIG. 3 is a sectional view depicting one of unit cells of fuel cells according to Embodiments 2, 3 and 4 of this invention;
FIG. 4 is a sectional view showing one of unit cells of a fuel cell according to Embodiment 5 of this invention;
FIG. 5 is diagram representing the amounts of oxygen gas permeating through the unit cells shown in FIG. 2 to 4 and the amount of oxygen gas permeating through a conventional unit cell;
FIG. 6 is a graph representing a graph representing the relation between the current density and the voltage, observed in the unit cells of Embodiments 1 and 5 and in a conventional unit cell;
FIG. 7 is a graph is a graph representing the relation between the power-generating time and the cell voltage, observed in the conventional unit cell and the unit cells according to Embodiments 1, 3 and 5 of this invention, and the relation between the power-generating time and the fluorine-exhausting speed, observed in the conventional cell unit and the cell unit according to Embodiment 5 of this invention;
FIG. 8 is a graph representing the relation between the current density and the voltage, observed in the conventional unit cell and the unit cells according to Embodiments 2 and 3 of this invention;
FIG. 9 is a conceptual diagram showing the internal structure of the second electrolyte layer incorporated in Embodiment 3 of this invention;
FIG. 10 is a conceptual diagram depicting the internal structure of the second electrolyte layer incorporated in Embodiment 4 of this invention;
FIG. 11 is a graph representing the internal resistance of the unit cell according to Embodiment 3 and that of the unit cell according to Embodiment 4, for comparison;
FIG. 12 is a conceptual diagram illustrating the internal structure of the second electrolyte layer incorporated in Embodiment 4 of this invention;
FIG. 13 is a diagram explaining a process of manufacturing the electrolyte layer in Embodiment 6 of this invention;
FIG. 14 is a diagram explaining a process of manufacturing the electrolyte layer in Embodiment 7 of this invention;
FIG. 15 is a diagram explaining a process of manufacturing the electrolyte layer in Embodiment 8 of this invention;
FIG. 16 is a sectional view showing the interface between the catalyst layer an the electrolyte layer in Embodiment 7 of this invention;
FIG. 17 is a schematic sectional view depicting the interface between the catalyst layer and the electrolyte layer in Embodiment 8 of this invention; and
FIG. 18 is a graph showing the current that flows in a ring electrode when the hydrogen peroxide generated at a platinum-cobalt catalyst.

### Best Mode for Carrying Out the Invention

Embodiments of this invention will be described with reference to the accompanying drawings. FIGS. 2, 3 and 4 are sectional views showing unit cells according to three embodiments, respectively. The configuration of each unit cell will be briefly described. The unit cell is for use in a fuel cell.
It comprises a cathode 1, an anode 2 opposed to the cathode 1, and an electrolyte member 3 (i.e. membrane of fluorine-based sulfonate polymer containing sulfonic group) interposed between the poles 1 and 2.

The electrolyte member 3 of a unit cell A of this invention, shown in FIG. 2, is a two-layer structure that comprises a first electrolyte layer 3A and a second electrolyte layer 3B. The electrolyte layer 3A laid on the catalyst layer 1B of the cathode 1. The second electrolyte layer 3B is laid on the catalyst layer 2B of the anode 2.

The second electrolyte layer 3B prevents the permeation of oxygen from cathode 1 to anode 2. The second electrolyte layer 3B contains catalyst made of material, which will be described later. The catalyst is, for example, dispersed in the second electrolyte layer 3B. The unit cell is interposed between two separators 4 and 5. The separator 4 is provided to supply oxidizer. The separator 5 is provided to supply fuel. The unit cell and the separators 4 and 5 constitute a cell unit.

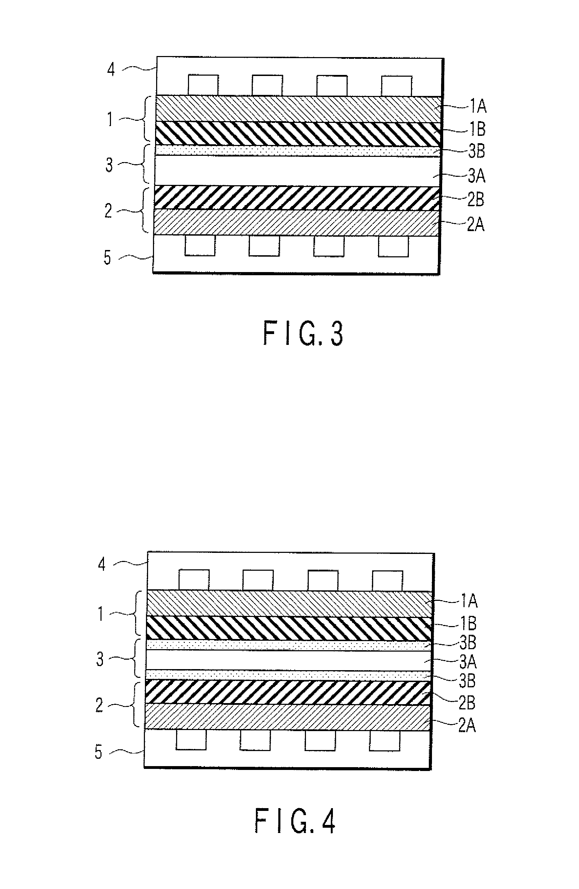

The electrolyte member 3 of a unit cell B of this invention, shown in FIG. 3, is a two-layer structure that comprises a first electrolyte layer 3A and a second electrolyte layer 3B. The electrolyte layer 3B is laid on the catalyst layer 1B of the cathode 1. The first electrolyte layer 3A is laid on the catalyst layer 2B of the anode 2.

The second electrolyte layer 3B prevents the permeation of oxygen from the cathode 1 to the anode 2. The second electrolyte layer 3B contains catalyst made of material that will be described later. The catalyst is, for example, dispersed in the second electrolyte layer 3B. The unit cell is interposed between two separators 4 and 5. The separator 4 is provided to supply oxidizer supply. The separator 5 is provided to supply fuel. The unit cell, separator 4, and separator 5 constitute a cell unit.

The electrolyte member 3 of a unit cell C of this invention, shown in FIG. 4, is a three-layer structure that comprises a first electrolyte layer 3A and two second electrolyte layer 3B. The layer 3A is interposed between the layers 3B. One electrolyte layer 3B is laid on the catalyst layer 1B of cathode 1. The other electrolyte layer 3B is laid on the catalyst layer 2B of anode 2.

The second electrolyte layer 3B prevents the permeation of oxygen from the cathode 1 to the anode 2. The second electrolyte layer 3B contains catalyst that is made of material mentioned later, which will be described later. This catalyst is, for example, dispersed in the second electrolyte layer 3B. The unit cell is interposed between two separators 4 and 5. The separator 4 is provided to supply oxidizer. The separator 5 is provided to supply fuel. The unit cell, separator 4 and separator 4 constitute a cell unit.

The cathodes 1 and the anodes 2, which are incorporated in the "unit cells A of this invention," unit cell B of this invention" and "unit cell C of this invention," described above, comprise a diffusion layer and a catalyst layer, each. Nonetheless, they may have an intermediate layer made of, for example, carbon and interposed between the diffusion layer and catalyst layer.

The following tests were carried out to evaluate the effect of preventing the npermeation of oxygen through the electrolyte member 3 used in the unit cell of this invention. First, the electrolyte, i.e., the sample, was interposed between two boards that could diffuse gases, thus forming a layer. This layer was set on a holder that could supply and receive reactant gases at both sides. Pure hydrogen humidified before hand was supplied to one side of the sample, and pure oxygen humidified beforehand was supplied to the other side of the sample. The oxygen contained in the pure hydrogen discharged was quantified with a gas analyzing apparatus. Thus, the oxygen permeated from the pure oxygen supply side to the pure hydrogen supply side was evaluated.

In the test, neither oxidizer the electrode catalyst layer 1B nor the anode catalyst layer 2B were not formed in order to exclude the effect of the oxygen consumed in the reaction of hydrogen gas and oxygen gas in a catalyst layer. The conventional electrolyte layer, which was composed of two electrolyte layers 3A bonded together, was examined in the same way as a comparative example. In the conventional unit cell, one electrolyte layer is usually used. In the examination, however, the above-described structure was used in order to exclude the influence of two layers bonded together. Nonetheless, the comparative example is "conventional unit cell," since oxygen permeated through the electrolyte layer in substantially the same amount as in the case of a unit cell having one electrolyte layer.

The sides to which pure hydrogen and pure oxygen are supplied are similar to those of the "cell unit A of this invention," "cell unit B of this invention" and "cell unit C of this invention."

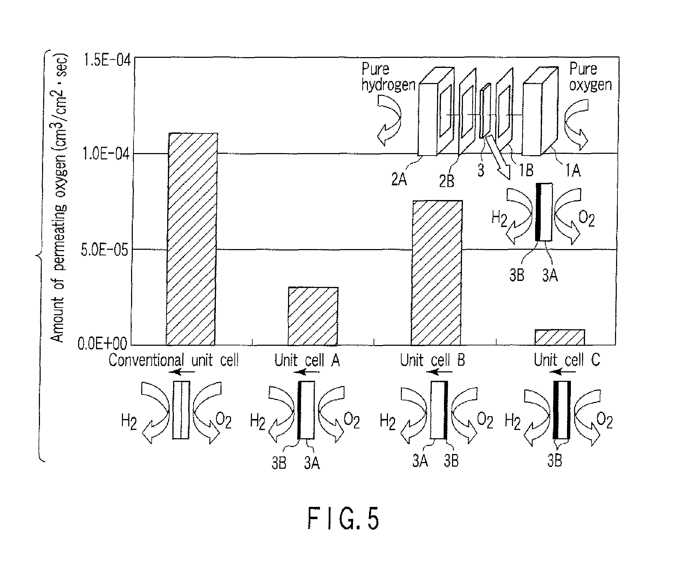

FIG. 5 shows the oxygen-permeating speed (amount permeating) measured for the electrolyte of each unit cell composition.

The oxygen permeating speed of the electrolyte of "unit cell A" of this invention was about 25% of the "conventional unit cell." That shows that the permeation of oxygen through the electrolyte layer can be sufficiently prevented. The speed at which oxygen passes through the electrolyte layer of "unit cell B of this invention" was about 65% of the speed at which oxygen passes through the "conventional unit cell." Thus, the electrolyte layer was inferior to that of the "unit cell A of this," and its effect is small. However, some effect of preventing the permeation of oxygen was confirmed. The oxygen permeating speed of the electrolyte layer of the "unit cell C of this invention" was about 7% of the "conventional unit cell." This electrolyte layer had the greatest effect of preventing the permeation of oxygen. This is probably because both the "unit cell A of this invention" and the "unit cell B of this invention" achieved the effect of preventing the permeation of oxygen.

The prevention of oxygen permeation through the electrolyte layer of the "unit cell A of this invention" and "unit cell C of this invention," in which the second electrolyte layer 3B is provided on the anode 2 as described above, was comparatively prominent.

The reason may be as follows.

Generally, the diffusion of any substance in a membrane of solid polyelectrolyte is concentration diffusion. Concentration distribution therefore takes place in the electrolyte membrane. The transmission coefficient of oxygen is small, several times as small as the transmission coefficient of hydrogen. Therefore, the oxygen concentration in the second electrolyte layer 3B on the anode 2 may be comparatively low, and the hydrogen concentration in the layer 3B may be comparatively high. Thus, if the catalyst is concentrated in this region, oxygen can be effectively reacted with hydrogen and greatly consumed in the electrolyte layer. The reaction in which oxygen is reacted with hydrogen can be attributed to the following formula (4).

2H₂ + O₂ → 2H₂O (4)

The second electrolyte layer 3B on the anode 2 needs to have some electronic insulation property. If catalyst is contained in an excessive amount, the electronic conductivity of the second electrolyte layer will become high. If the electron conductivity of the second electrolyte layer 3B will become high, the potential of the catalyst contained in the second electrolyte layer 3B that contacts the anode 2 will approach the potential (comparatively low) of the anode. Consequently, as FIG. 1 shows, the reaction of hydrogen with oxygen in an electrolyte layer will generate hydrogen peroxide. In view of this, it is necessary to preserve the electronic insulation of the second electrolyte layer 3B to some extent. The electronic conductivity increases is tolerable to some extent. In the present invention, the original electrolyte layer (first electrolyte layer 3A) prevents short circuit in the unit cell, even if the electronic conductivity of the second electrolyte layer 3B increases a little.

The electrolyte layer of the "unit cell B of this invention," whose second electrolyte layer 3B had been provided on the cathode 1, had but a relatively small effect of preventing the permeation of oxygen. This is probably because the oxygen concentration of the second electrolyte layer 3B on the cathode 1 has a comparatively high oxygen concentration, but has a comparatively low hydrogen concentration, unlike in the case where the second electrolyte layer 3B is provided on the anode 2. Therefore, part of oxygen will pass, without reacting with hydrogen, even if the catalyst is contained in this region. Nevertheless, the second electrolyte layer 3B provided on the cathode 1 can effectively prevent the permeation of oxygen only if much catalyst is added, at the sacrifice of electronic insulation. Even if the electronic insulation of the second electrolyte layer 3B is impaired, the potential of the catalyst contained approaches the potential (comparatively high) of the cathode. Hence, the generation of hydrogen peroxide will not be accelerated as shown in FIG. 1.

As described above, the electrolyte member 3 of the "unit cell A of this invention," "unit cell B of this invention" and "unit cell C of this invention" can effectively prevent the permeation of oxygen from the cathode 1 to the anode 2. Especially, electrolyte member 3 of the composition of "unit cell C of this invention" that has the second electrolyte layers 3B arranged on both the cathode 1 and the anode 2 is remarkably effectively. The operation described above can control the generation of hydrogen peroxide, and can prevent the degradation of the electrolyte member 3. The operation can maintain a stable high cell characteristic for a long time.

In this invention, the second electrolyte layer 3B contacts an electrode having high thermal conductivity, such as the cathode 1 or the anode 2. Therefore, the second electrolyte layer 3B does not accumulate the heat of the reaction of oxygen and hydrogen. The reaction heat is radiated from one of these electrodes. This helps to reduce the damage to the electrolyte layer, which results from the reaction heat.

In this experiment, the electrolyte layer is a membrane of fluorine-based sulfonate polymer containing sulfonic group used as ion-conduction group. Nonetheless, the same advantage can be attained, too, if the electrolyte layer is a membrane of polymer containing an ion-conduction group such as carboxyl group, phosphoric group or the like.

Platinum supported by carbon is used as catalyst in the second electrolyte layer 3B. Nevertheless, platinum need not be supported by carbon. Further, other metal having catalytic property, such as cobalt, palladium, gold, iridium, rhodium or ruthenium, may be used instead, either singly or in combination, to achieve the same advantage. Particularly, platinum-cobalt catalyst has high catalytic activity. Since this catalyst can well control the generation of hydrogen peroxide, it is particularly useful if contained in electrolyte layer 3B.

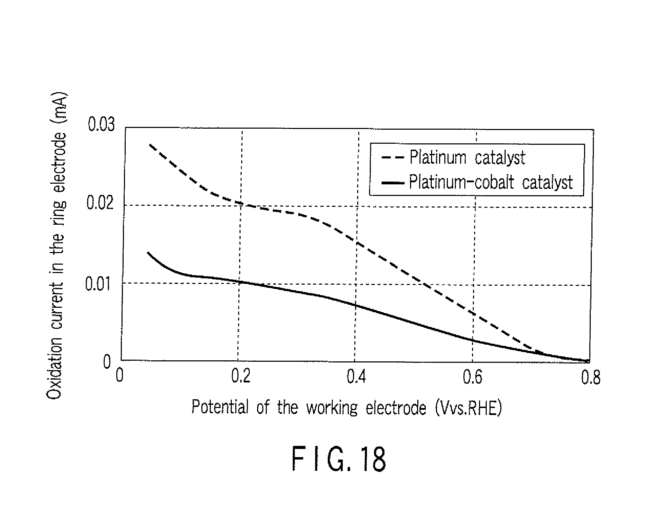

FIG. 18 is a graph showing the amount of hydrogen peroxide, which was measured by means of the rotary ring-disc electrode method. The potential of the working electrode is plotted on the abscissa, and the current (oxidization current in the ring electrode) that flows in the ring electrode when hydrogen peroxide is plotted on the ordinate. The current is an indicator of the amount of hydrogen peroxide generated. The value measured at the platinum catalyst is shown, too, as reference. As compared with the value at the platinum catalyst, the amount of hydrogen peroxide generated at low potential is particularly small. In this embodiment is a fuel cell that uses hydrogen gas as fuel. Nonetheless, the same advantage can be attained if the embodiment is a fuel cell (direct-methanol type fuel cell: DMFC) that uses liquid as fuel.

To manufacture the unit cell of this invention, described above, which has an electrolyte layer that prevents the permeation of oxygen from a cathode to the anode, it is desirable to bond the anode, electrolyte layer and cathode at a time by thermo-compression, thus forming an integral unit. The contact nature of a member improves by this, respectively. The components thus firmly contact one another. Hence, it is not only possible to manufacture a unit cell of high performance, but also easy to lay such unit cells one on another to manufacture a fuel-cell stack.

In manufacturing the electrolyte described above, the second electrolyte layer containing catalyst may be prefabricated on a resin sheet. Then, the second electrolyte layer can be formed thin, and the second electrolyte layer can be prevented from being torn during the manufacture of the electrolyte. This renders it easy to manufacture the electrolyte layer. The second electrolyte layer formed on the resin sheet may be bonded by thermo-compression to an electrolyte layer containing no catalyst, an anode or a cathode. In this case, a unit cell can be manufactured by exfoliating the resin sheet without damaging the second electrolyte layer.

Embodiments of this invention will be described in detail.

### (Embodiment 1)

The cell unit of the fuel cell according to Embodiment 1 of this invention will be described, with reference to FIG. 2. Each unit cell of Embodiment 1 is identical in structure to the unit cell A shown in FIG. 5. The cell unit of Embodiment 1 comprises a unit cell, a separator 4 for oxidizer supply, and a separator 5 for fuel supply. The unit cell is interposed between the separator 4 for supplying oxidizer and the separator 5 for supplying fuel. The unit cell comprises a cathode 1, an anode 2, and an electrolyte member 3. The cathode 1 consists of a cathode catalyst layer 1B and a cathode diffusion layer 1A. The anode 2 consists of an anode catalyst layer 2B and an anode diffusion layer 2A. The electrolyte member 3 is interposed between the cathode 1 and the anode 2 and consists of a first electrolyte layer 3A and a second electrolyte layer 3B. The second electrolyte layer 3B is arranged, directly contacting the anode catalyst layer 2B.

The first electrolyte layer 3A is a membrane of fluorine-based sulfonate polymer having sulfonic acid group as hydrogen ion-exchange group. Specifically, it is a Nafion membrane (made by E. I. du Pont de Nemours & Co.) of 25 microns thick. The second electrolyte layer 3B is a fluorine-based sulfonate polymer having sulfonic acid group as hydrogen-ion exchange group and containing metal supported by carbon and having catalytic action. The layer 3B is 10 microns thick.

A method of manufacturing the unit cell of Embodiment 1 will be explained.

The anode 2 was prepared by applying catalyst paste to the anode diffusion layer 2A made of carbon paper that had been rendered water-repellant with polytetrafluoroethylene and anode catalyst layer 2B. An anode diffusion layer 2A was thereby formed. The catalyst paste had been prepared by adding solution of fluorine-based sulfonate polymer resin to carbon-supported catalyst in which carbon black supported 40 wt% of platinum and then by kneading the resulting mixture, providing a paste. This paste was applied to the layer 2A so that the amount of platinum applications was 0.4 mg/cm². The resulting paste membrane was dried at 70°C, removing the solvent. Note that, a thin membrane consisting of carbon powder and fluororesin had been formed on the surface on which anode catalyst layer 2B was to be formed. This thin membrane is not show in FIG. 2.

Next, a cathode 1 was fabricated by the same process as the anode 2, except that the carbon-supported catalyst used consisted of carbon black and 50 wt% of platinum supported by the carbon black. The catalyst was applied such that platinum was applied in an amount of 0.4 mg/cm².

The second electrolyte layer 3B was formed by applying paste to a polytetrafluoroethylene sheet and by drying the resulting structure at 70°C at a reduced pressure. The paste used had been prepared by dispersing, in a solution of fluorine-based sulfonate polymer resin, carbon-supported catalyst comprising carbon black and 50 wt% of platinum supported by the carbon black. The composition of the past was adjusted so that the mixing weight ratio of the carbon-supported catalyst and the polyelectrolyte became 20:80. The second electrolyte layer 3B was 10 microns thick. Next, the second electrolyte layer 3B is peeled from the polytetrafluoroethylene sheet. The electrical resistance of the second electrolyte layer 3B was measured. The layer 3B was found to have electrical resistance of about 0.4 MΩ. That is, the layer 3B had sufficient electronic-insulation resistance. The cathode 1, the first electrolyte layer 3A, the second electrolyte layer 3B, and the anode 2 were laid one on another, in the order mentioned. These layers were hot-pressed together, for 5 minutes at 130°C at a pressure of 14 kgf/cm².

Since the four members were hot-pressed at a time, the time required to manufacture the unit cell was shortened.

The unit cell thus manufactured was interposed between the separator 4 for supplying the oxidizer and the separator 5 for supplying the fuel. A cell unit was thereby obtained. The cell unit was tested for its power-generating characteristic, in the procedure described above.

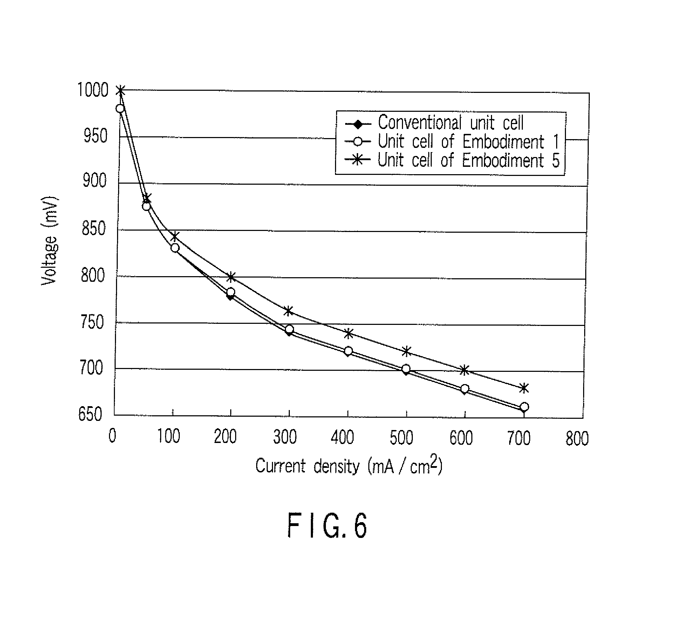

The results of the power generation test will be explained. A comparative unit cell having the same electrodes as described above was manufactured, using the conventional electrolyte layer that contains no catalyst, and was subjected to the power generation test, too. FIG. 6 shows the current/voltage characteristic of the unit cell of Embodiment 1 and that of the conventional unit cell.

As seen from FIG. 6, the unit cell of Embodiment 1 was somewhat superior to the convention unit cell in terms of open-circuit voltage and cell voltage at each current density.

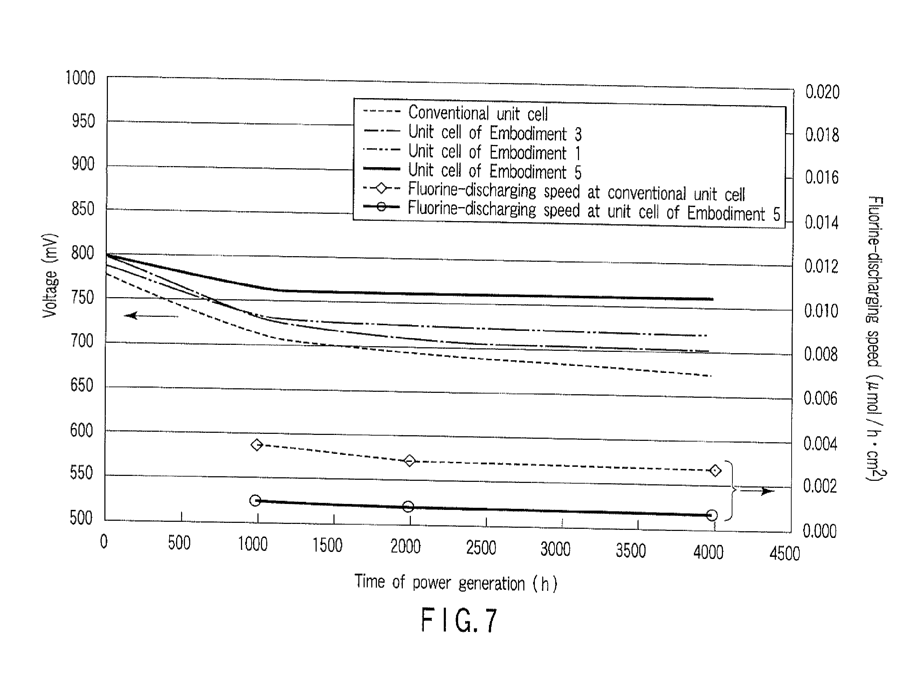

FIG. 7 illustrates how the cell voltage of the unit cell of Embodiment 1 and that of the conventional unit cell change with time. The unit cell of Embodiment 1 exhibits a cell voltage a little higher than that of the conventional unit cell. In terms of the seed at which the cell voltage drops, the cell unit of Embodiment 1 is greatly improved over the conventional unit cell.

This is probably because the second electrolyte layer provided on the anode effectively prevents the permeation of oxygen from the cathode to the anode, minimizing the degradation of the electrolyte layer due to generation of hydrogen peroxide.

### (Embodiment 2)

The cell unit of the embodiment 2 of this invention will be described, with reference to FIG. 3. The structure of each unit cell of Embodiment 2 is identical in structure to the unit cell B shown in FIG. 5.

The cell unit of Embodiment 2 comprises a unit cell, a separator 4 for oxidizer supply, and a separator 5 for fuel supply. The unit cell is interposed between the separator 4 for supplying oxidizer and the separator 5 for supplying fuel. The unit cell comprises a cathode 1, an anode 2, and an electrolyte member 3. The cathode 1 consists of a cathode catalyst layer 1B and a cathode diffusion layer 1A. The anode 2 consists of an anode catalyst layer 2B and an anode diffusion layer 2A. The electrolyte member 3 is interposed between the cathode 1 and the anode 2 and consists of a first electrolyte layer 3A and a second electrolyte layer 3B. The second electrolyte layer 3B is arranged, directly contacting the anode catalyst layer 1B.

The first electrolyte layer 3A is a membrane of fluorine-based sulfonate polymer having sulfonic acid group as hydrogen-ion exchange group. Specifically, it is a Nafion membrane (made by E. I. du Pont de Nemours & Co.) of 25 microns thick. The second electrolyte layer 3B is a fluorine-based sulfonate polymer having sulfonic acid group as hydrogen-ion exchange group and containing metal supported by platinum black and having catalytic action. The layer 3B is 10 microns thick.

A method of manufacturing the unit cell of Embodiment 2 will be explained. The anode 2 and the cathode 1 were made in the same way as in Embodiment 1. The second electrolyte layer 3B was formed by applying past to a polytetrafuluoroethylene sheet and drying the resultant structure at 70°C at a reduced pressure. The paste had been prepared by dispersing fluorine-based sulfonate polymer resin in a solution made of water and platinum black dispersed in the water. The composition of the past was adjusted so that the mixing weight ratio of the platinum black and the polyelectrolyte became 5:95. The second electrolyte layer 3B was 10 microns thick. The second electrolyte layer 3B was peeled from the polytetrafluoroethylene sheet. The electrical resistance of the second electrolyte layer 3B was measured. The layer 3B was found to have electrical resistance of about 1 MΩ or more. That is, the layer 3B had sufficient electronic-insulation resistance.

The anode 2, the first electrolyte layer 3A, the second electrolyte layer 3B, and the cathode 1 were laid one on another, in the order mentioned. They were hot-pressed together, for 5 minutes at 130°C at a pressure of 14 kgf/cm². Since the four members were hot-pressed at a time, the time required to manufacture the unit cell was shortened.

The unit cell thus manufactured was interposed between the separator 4 for supplying the oxidizer and the separator 5 for supplying the fuel. A cell unit was thereby obtained. The cell unit was tested for its power-generating characteristic, in the procedure described above.

The results of the power generation test will be explained. A comparative unit cell having the same electrodes as described above was manufactured, using the conventional electrolyte layer that contains no catalyst, and was subjected to the power generation test, too.

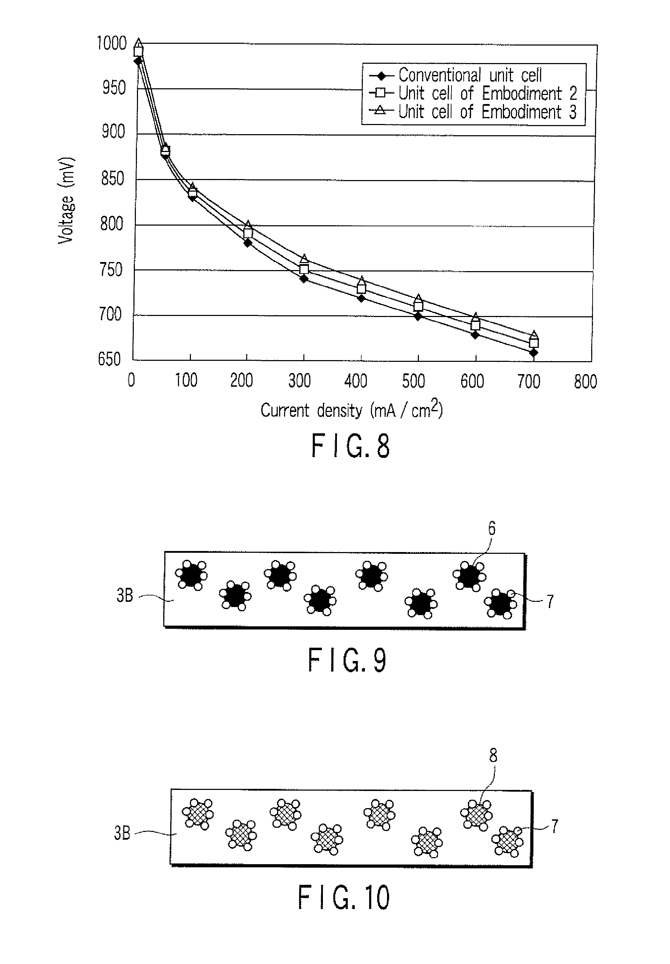

FIG. 8 shows the current-voltage characteristic of the unit cell of Embodiment 2 and that of the conventional unit cell. The conditions of generating power in this case are as follows. That is, the unit cell temperature was 80°C; the reactant gas was pure hydrogen/air; the reactant gas was humidified at 80°C/70°C; the use ratio of reactant gas was 70%/40%.

As seen from FIG. 8, the unit cell of Embodiment 2 had an open-circuit voltage higher than that of the conventional unit cell. The cell voltage was high at each current density. In the conventional unit cell, hydrogen gas permeated from the anode 2 to the cathode 1 and reacted directly with the oxygen gas at the catalyst of the cathode catalyst layer 1B. Inevitably, a short-circuit current flowed in the open-circuit state, and the open-circuit voltage dropped. The hydrogen gas hindered the oxygen-reduction reaction at the cathode catalyst. This may be the reason why the hydrogen gas caused a cell-voltage drop at each current density. In the unit cell of Embodiment 2, the hydrogen gas from anode 2 reacted with the oxygen gas from the cathode, at the platinum black contained in the second electrolyte layer 3B. The hydrogen gas was therefore used up, forming water, before reaching the cathode, and it becomes water. Thus, the second electrolyte member 3 provided on the cathode 1 seems to have both a function of preventing the permeation of oxygen and a function of preventing the permeation of hydrogen.

The unit cell of Embodiment 2, which has the second electrolyte layer provided on the anode as in this embodiment, was evaluated. As seen from the result of the evaluation (see FIG. 6), the unit cell was improved over the conventional unit cell in terms of cell characteristics, i.e., open-circuit voltage and voltage at each current density. However, it was not so improved as this embodiment. This is probably because the unit cell of Embodiment 2 differs in concentrations of hydrogen and oxygen in the electrolyte member 3. The speed at which gases pass through the electrolyte member 3 depends on the operating temperature of the cell and the amount of water in the electrolyte layer. Generally, hydrogen passes several times as fast as oxygen. Hence, excessive water that does not react with oxygen passes through the second electrolyte layer in an excessive amount because the hydrogen concentration is higher than the oxygen concentration in the electrolyte layer even if the electrolyte layer is provided on the anode 2. As a result, hydrogen passes through the first electrolyte layer and reaches the cathode 1. If the second electrolyte layer is formed on the cathode 1, the oxygen concentration in the second electrolyte layer is high. Oxygen can therefore reacts with hydrogen permeating from the anode 2, preventing the permeation of hydrogen.

In the unit cell of Embodiment 2, the second electrolyte layer 3B is interposed, as indicated above, between the cathode 1 and the first electrolyte layer 3A. Therefore, not only the oxygen permeation to anode 2 from cathode 1 can be prevented, but also the hydrogen permeation to cathode 1 from anode 2 can be effectively prevented. Therefore, the reaction at the cathode catalyst layer 1B is not hindered. A high cell voltage can be attained. The metal catalyst used as compared with the conventional method can be lessened. In addition, the amount of the metal catalyst used can be smaller than in the conventional method. Further, if the concentration of metal catalyst in the second electrolyte layer 3B is high, this layer can prevent the permeation of oxygen and the permeation of oxygen even if it is thin. Therefore, a high cell voltage can be attained in this case, too. The concentration of catalyst metal in the second electrolyte layer 3B may be increased and the second electrolyte layer 3B may be made thin. If this is the case, the heat generated in the second electrolyte layer 3B will be quickly radiated thanks to the thermal conduction of the cathode 1. The second electrolyte layer 3B can be prevented from being damaged, in spite of the reaction heat.

Even if the electronic insulation decreases due to an increase in the concentration of the metal catalyst, the electrolyte layer 3A can maintain sufficient electric insulation. Therefore, no internal short circuit occurs in the unit cell. This is another advantage.

Platinum is used as metal catalyst in this embodiment. Nonetheless, cobalt, palladium, gold, iridium, rhodium and ruthenium may be used instead, singly or in combination. The same advantage can be attained in this case, too. The second electrolyte layer 3B is made of fluorine-based sulfonate polymer resin having sulfonic group used as hydrogen-ion exchange group. Instead, ionic conduction resin having ion-conduction group, such as carboxyl group and phosphoric group, may be used. The same advantage is attained in this case, too.

### (Embodiment 3)

Embodiment 3 will be described with reference to FIG. 9. The cell unit of Embodiment 3 is similar in configuration to the cell unit of Embodiment 2 shown in FIG. 3.

However, it differs in that carbon 6 supports metal catalyst 7 in the second electrolyte layer as shown in FIG. 9 and able to perform a catalytic action is supported by carbon material 6. A method of manufacturing the unit cell according to Embodiment 3 will be described.

The anode 2 and the cathode 1 were fabricated in the same way as in Embodiment 2. The second electrolyte layer 3B was formed by applying past to a sheet of polytetrafuluoroethylene and drying the resultant structure at 70°C at a reduced pressure. The paste had been prepared by dispersing carbon-supported catalyst in which carbon black supported 50 wt% of platinum, in a solution of fluorine-based sulfonate polymer resin. The composition of the past was adjusted so that the mixing weight ratio of the carbon-supported platinum catalyst and the polyelectrolyte became 20:80. The second electrolyte layer 3B was 10 microns thick. The second electrolyte layer 3B was peeled from the polytetrafluoroethylene sheet. The electrical resistance of the second electrolyte layer 3B was measured. The layer 3B was found to have electrical resistance of about 0.3 MΩ. That is, the layer 3B was a little more electrically conductive than that of Embodiment 2, but had sufficient electronic-insulation resistance.

The anode 2, the first electrolyte layer 3A, the second electrolyte layer 3B, and the cathode 1 were laid one on another, in the order mentioned. They were hot-pressed together, for 5 minutes at 130°C at a pressure of 14 kgf/cm². Since the four members were hot-pressed at a time, the time required to manufacture the unit cell was shortened.

The results of the power generation test performed will be explained with reference to FIG. 8. The conditions of generating power were the same as in Embodiment 2. As seen from FIG. 8, the unit cell of Embodiment 3 exhibited better current-voltage characteristics than the unit cell of Embodiment 2. It had higher open-circuit voltage and higher cell voltage at each current density than the unit cell of Embodiment 2. The mechanism of improving the cell characteristic appears to be the same as in Embodiment 2. In Embodiment 3, the electronic insulation of the second electrolyte layer 3B was relatively low. Nevertheless, there was the first electrolyte layer 3A, the open-circuit voltage was high because no internal short circuit developed because of the first electrolyte layer 3A. In Embodiment 3, carbon black supports platinum having catalytic capability, and the surface area is larger than in Embodiment 2 in which platinum black is used. Hence, the effect of preventing the permeation of hydrogen is considered to have increased by the increase in the catalytic capability.

FIG. 7 illustrates how the cell voltage of the unit cell of Embodiment 3 and that of the conventional unit cell change with time. As seen from FIG. 7, the unit cell of Embodiment 3 has an initial cell voltage much higher than that of the conventional unit cell. In terms of the seed at which the cell voltage drops, the cell unit of Embodiment 3 is greatly improved over the conventional unit cell.

This is probably because the second electrolyte layer provided on the cathode effectively prevents the permeation of oxygen from the cathode to the anode, minimizing the degradation of the electrolyte layer due to generation of hydrogen peroxide.

In the unit cell of Embodiment 3, the second electrolyte layer 3B is interposed between the cathode 1 and the first electrolyte layer 3A. This can prevents not only the permeation of oxygen from the cathode 1 to the anode 2, but also the permeation of hydrogen from the anode to the cathode 1. Therefore, the cathode catalyst layer 1B does not hinder the electrode reaction, and a high cell voltage can be attained. Further, since the second electrolyte layer 3B can formed thin, the metal catalyst can be used in a smaller amount than in the conventional method.

Since the concentration of the metal catalyst contained in the second electrolyte layer 3B is high, the layer 3B can effectively prevent the permeation of hydrogen even if it is thin. Therefore, the unit cell can have high cell voltage. Although the electronic insulation decreases because the concentration of the metal catalyst is high, since the first electrolyte layer 3A maintained the electric insulation, no internal short circuit occurs.

In this embodiment, carbon black supports the metal that has a catalytic action. Instead, carbon nano-tube, carbon textile or fullerene may support the metal. The same advantage can be attained in this case, too.

Platinum is used as metal having a catalytic action in this embodiment. Nonetheless, cobalt, palladium, gold, iridium, rhodium, or ruthenium may be used in place of platinum. In this case, too, the same advantage is attained.

### (Embodiment 4)

Embodiment 4 will be described with reference to FIG. 10. The cell unit of Embodiment 4 is similar in configuration to the cell unit of Embodiment 2 shown in FIG. 3. It differs, however, in that oxide 8 supports the metal catalyst 7 which has a catalytic action and which is contained in the second electrolyte layer, as is illustrated in FIG. 1

A method of manufacturing the unit cell of Embodiment 4 will be explained.

The anode 2 and cathode 1 were fabricated in the same way as in Embodiment 1. The second electrolyte layer 3B was formed by applying past to a polytetrafuluoroethylene sheet and drying the resultant structure at 70°C at a reduced pressure. The paste had been prepared by adding fluorine-based sulfonate polymer resin to a solution made of water and titanium dioxide supporting 30 wt% of platinum and dispersed in the water. The composition of the past was adjusted so that the mixing weight ratio of the platinum black and the polyelectrolyte became 5:95. The second electrolyte layer 3B was 10 microns thick. The second electrolyte layer 3B was peeled from the polytetrafluoroethylene sheet. The electrical resistance of the second electrolyte layer 3B was measured. The layer 3B was found to have electrical resistance of about 1 MΩ or more. Note that titanium dioxide supporting platinum had been prepared by reducing platinum by using formaldehyde made by dispersing titanium dioxide in an aqueous solution of platinum chloride.

The anode 2, the first electrolyte layer 3A, the second electrolyte layer 3B, and the cathode 1 were laid one on another, in the order mentioned. They were hot-pressed together, for 5 minutes at 130°C at a pressure of 14 kgf/cm². The unit cell thus manufactured was subjected to the power generation test. It was confirmed that, like the unit cell of Embodiment 3, this unit cell was one improved over the conventional unit cell in open-circuit voltage and cell voltage at each current density.

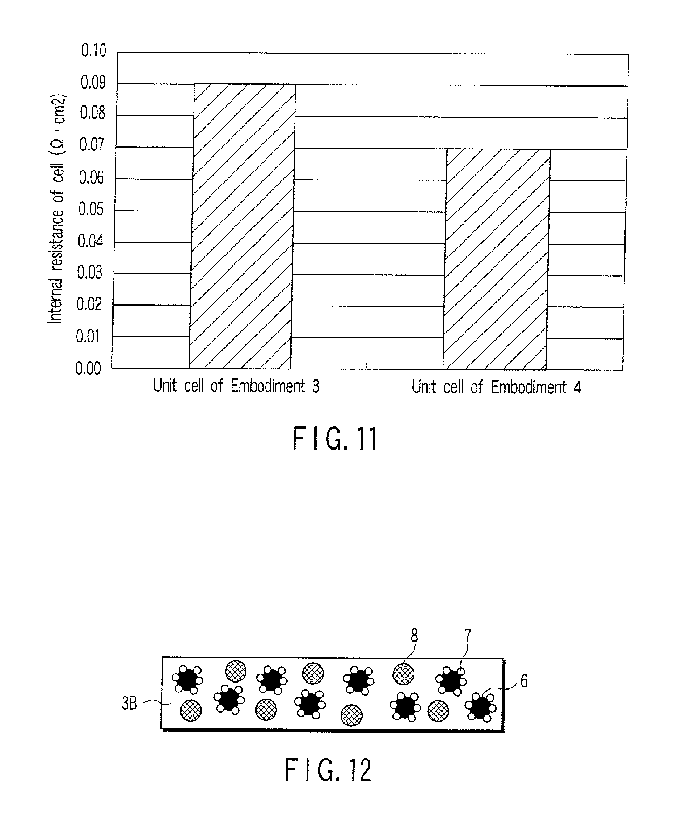

The advantage achieved by using titanium dioxide as support will be explained, with reference to FIG. 11. FIG. 11 shows the internal resistances of the unit cells of Embodiments 3 and 4, measured by the 1kHz alternating-current-impedance method. The unit cell of Embodiment 4 had a lower internal resistance than the unit cell of Embodiment 3. The cell voltage can be higher by the decrease in internal resistance. In the unit cell of Embodiment 4, oxide 8 supports the metal catalyst 7 that has a catalytic action. The oxide 8 holds the water generated on the metal catalyst 7 in the second electrolyte layer 38. This may be the reason why the water content of the electrolyte layer increases, lowering the internal resistance.

In this embodiment, titanium dioxide (TiO₂) is used as oxide. Nonetheless, silicon dioxide (SiO₂), zirconium dioxide (ZrO₂), second tin dioxide (SnO₂), aluminum oxide (Al₂O₃) or cerium dioxide (CeO₂) may be used instead. In this case, too, the same advantage can be attained. Further, oxide 8 and metal catalyst 7 having a catalytic action and supported by carbon were contained in the second electrolyte layer 3B as shown in FIG. 12. In this case, too, the same advantage was achieved.

### (Embodiment 5)

A cell unit for use in a fuel cell according to Embodiment 5 of this invention will be described, with reference to FIG. 4. The cell unit of Embodiment 5 is identical in structure to the unit cell C shown in FIG. 5. The cell unit of Embodiment 5 comprises a unit cell, a separator 4 for oxidizer supply, and a separator 5 for fuel supply. The unit cell is interposed between the separator 4 for supplying oxidizer and the separator 5 for supplying fuel. The unit cell comprises a cathode 1, an anode 2, and an electrolyte member 3. The cathode 1 consists of a cathode catalyst layer 1B and a cathode diffusion layer 1A. The anode 2 consists of an anode catalyst layer 2B and an anode diffusion layer 2A. The electrolyte member 3 is interposed between the cathode 1 and the anode 2 and consists of a first electrolyte layer 3A and second electrolyte layers 3B. The second electrolyte layers 3B are arranged, directly contacting the surfaces of the anode catalyst layer 2B, respectively.

The first electrolyte layer 3A is a membrane of fluorine-based sulfonate polymer having sulfonic acid group as hydrogen-ion exchange group. It is a Nafion membrane (made by E. I. du Pont de Nemours & Co.) of 25 microns thick. The second electrolyte layer 3B are made of a fluorine-based sulfonate polymer having sulfonic acid group as hydrogen-ion exchange group and containing metal supported by carbon and having catalytic action. The layers 3B are 10 microns thick.

A method of manufacturing the unit cell of this example 5 is explained. Anode 2 and cathode 1 were manufactured like Embodiment 1. The anode 2 and cathode 1 were fabricated in the same way as in Embodiment 1. Each second electrolyte layer 3B was formed by applying past to a polytetrafuluoroethylene sheet and drying the resultant structure at 70°C at a reduced pressure. The paste comprised a solution of fluorine-based sulfonate polymer resin and carbon black supporting 50 wt% of platinum and dispersed in the solution. The composition of the past was adjusted so that the mixing weight ratio of the catalyst supported by carbon-black and the polyelectrolyte became 20:80. The second electrolyte layers 3B were 10 microns thick. The second electrolyte layer 3B was peeled from the polytetrafluoroethylene sheet. The electrical resistance of the second electrolyte layers 3B was measured. The layers 3B was found to have electrical resistance of about 0.4 MΩ. That is, the layers 3B had sufficient electronic-insulation resistance.

Two second electrolyte layers 3B thus formed were arranged on the surfaces of the first electrolyte layer 3A. The three layers were bonded together by means of hot rollers heated to 120C. An electrolyte member 3 was thereby provided.

The cathode 1, electrolyte member 3 and anode 2 were laid one on another and hot-pressed together, for 5 minutes at 130°C at a pressure of 14 kgf/cm². The unit cell thus manufactured was interposed between the separator 4 for supplying oxidizing gas ant the separator 5 for supplying fuel. A cell unit was thereby provided.

The cell unit was subjected to power generation test in the same way as in Embodiment 1. The result of the test will be explained. FIG. 6 shows the current-voltage characteristic of the unit cell of Embodiment 5 and that of the conventional unit cell, and that of the unit cell of Embodiment 1. As seen from FIG. 6, the unit cell of Embodiment 5 was greatly improved over the conventional unit cell and the unit cell of Embodiment 1 in terms open-circuit voltage and cell voltage at each current density. This is probably because the permeation of hydrogen gas from the anode 2 to the cathode 1 was effectively prevented in the configuration of Embodiment 5.

FIG. 7 shows how the cell voltage and the number of fluorine ions change with time in the unit cell of Embodiment 5 and the conventional unit cell. (The number of fluorine ions has been calculated from the speed of exhausting fluorine.) Fluorine is a component of the electrolyte membrane. The degradation speed of the electrolyte membrane can be inferred from the amount of fluorine in the exhaust gas. The larger the amount of fluorine exhausted, the faster the electrolyte membrane will be degraded. The unit cell of Embodiment 5 has a higher cell voltage than the conventional unit cell. That is, the unit cell of Embodiment 5 is greatly improved in terms of the speed at which the cell voltage falls. This advantage can be proved by the low fluorine-discharging speed of the unit cell of Embodiment 5.

This may be because the two second electrolyte layers, which are provided on the anode and the cathode, respectively, can effectively prevent the permeation of oxygen and the permeation of hydrogen, respectively, thus minimizing the degradation of the electrolyte layers due to the generation of hydrogen peroxide. The unit cell of Embodiment 5 can attain both the advantage of Embodiment 1 and that of Embodiment 3.

The electrolyte layers were examined for possible damage after the test. No damages due to over-heating or the like were observed. This is perhaps because the reaction heat generated in the second electrolyte layers effect by which heat transfer is carried out to the electrode in which the heat of reaction generated in the second electrolyte layer adjoins.

### (Embodiment 6)

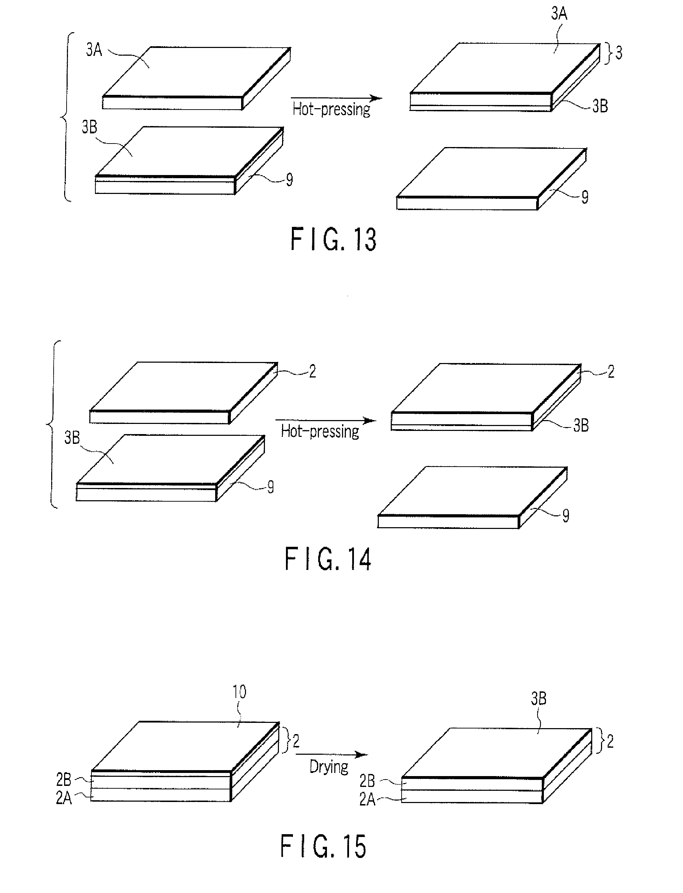

Embodiment 6 will be described with reference to FIG. 13. FIG. 13 shows a part of the process of manufacturing a unit cell. A solution of a fluorine-based sulfonate polymer resin, in which platinum black used as metal catalyst having catalytic action was dispersed, was applied to a polytetrafluoroethylene sheet, thus forming a second electrolyte layer 3B having thickness of 10 microns. The mixing weight ratio of platinum black and the polyelectrolyte catalyst was 10:90. Although the membrane was thin, it had no damages such as pinholes. A membrane having uniform thickness could be formed with high reproducibility.

Generally, any thin electrolyte layer 3B is hard to handle, particularly if the unit cell has a large surface area. In this embodiment, the electrolyte layer was formed on a polytetrafluoroethylene sheet 9. This made it easy to handle the electrolyte layer 3B. The second electrolyte layer 3B was laid on the first electrolyte layer 3A having thickness of 25 microns. These layers were hot-pressed together, for 3 minutes at 130°C at a pressure of 14 kgf/cm², thus providing a first electrolyte 3. Thereafter, the polytetrafluoroethylene sheet 9 was peeled from the second electrolyte layer 3B. Nevertheless, the first electrolyte 3 was easy to handle, because it was 35 microns thick and had uniform in thickness. A cathode 1 and an anode 2 were laid on the surfaces of the electrolyte member 3 thus fabricated. The poles 1 and 2 and the electrolyte member 3 were hot-pressed together, for 5 minutes at 130°C at a pressure of 14 kgf/cm², providing a membrane-electrode composite unit. Note that anode and the cathode were of the same type as used in Embodiment 1.

The unit cell thus obtained was subjected to a power generation test in the same way as in Embodiment 1. It was confirmed that the unit cell achieved the same advantage as the unit cell of Embodiment 1. In Embodiment 6, the second electrolyte layer is first formed on a resin sheet and then is bonded to the first electrolyte layer by hot-pressing, forming a thin electrolyte layer 3B. Therefore, the unit cell of Embodiment 6 can acquire better cell characteristics.

### (Embodiment 7)

Embodiment 7 will be described with reference to FIG. 14. FIG. 14 shows a part of manufacturing process of a unit cell. The second electrolyte layer 3B was formed on a polytetrafluoroethylene sheet 9 in the same way as in Embodiment 6. The second electrolyte layer 3B was laid on the anode 2. The layer3B and the pole 2 were hot-pressed together, for 3 minutes at 130°C at a pressure of 14 kgf/cm², thus providing an anode having an electrolyte layer. The polytetrafluoroethylene sheet was peeled from the second electrolyte layer 3B. The second electrolyte layer 3B had no defects such as pinholes or tears.

The first electrolyte layer 3A was interposed between the cathode and the anode, both had been fabricated. The poles 1 and 2 and the layer 3A were hot-pressed together, for 5 minutes at 130°C at a pressure of 14 kgf/cm², providing a unit cell. This unit cell was subjected to a power generation test in the same way as in Embodiment 1. It was confirmed that the cell unit achieved the same advantage as the unit cell of Embodiment 1. In Embodiment 7, the second electrolyte layer is first formed on a resin sheet and then is bonded to the cathode by hot-pressing, forming a thin electrolyte layer 3B. Therefore, the unit cell of Embodiment 6 can acquire better cell characteristics.

### (Embodiment 8)

Embodiment 8 will be described with reference to FIG. 15. FIG. 15 shows a part of manufacturing process of a unit cell. Solution 10 of a fluorine-based sulfonate polymer resin, in which platinum black used as metal having catalytic action was dispersed, was applied to a fuel-catalyst layer 2B formed on the anode 2. Thereafter, the resultant structure was dried, forming a second electrolyte layer 3B. The mixing weight ratio of platinum black and the polyelectrolyte catalyst was 10:90. The electrical resistance of the electrode was measured. The electrode was found to have electrical resistance of about 0.3 MΩ. It was confirmed that the electrode covered the entire surface of the anode catalyst layer 2B. The second electrolyte layer 3B was found to be 5 microns thick.

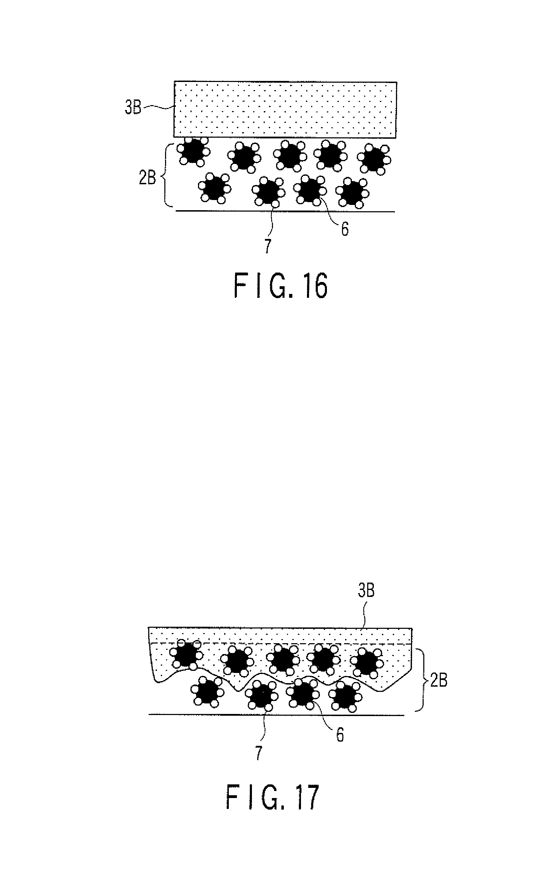

FIG. 16 is a sectional view showing the interface between the catalyst layer 2B and the electrolyte layer 3B. The catalyst layer 2B and the electrolyte layer 3B were clearly distinguished because they had been bonded to each other.

FIG. 17 is a section view showing a catalyst layer 2B and an electrolyte layer 3B that are not clearly distinguished, one from the other. Part of the solution of polyelectrolyte, applied, is absorbed in the electrolyte layer 2B. The electrolyte layer 3B can be thinner than the one shown in FIG. 16.

A first electrolyte layer 3A, 25 microns thick, was interposed between the cathode and the anode, both had been fabricated. The poles 1 and 2 and the layer 3A were hot-pressed together, for 5 minutes at 130°C at a pressure of 14 kgf/cm², providing a unit cell. This unit cell was subjected to a power generation test in the same way as in Embodiment 1. It was confirmed that the cell unit achieved the same advantage as the unit cell of Embodiment 1. In Embodiment 8, solution of polyelectrolyte, in which metal catalyst having catalytic action had been dispersed, was applied to the catalyst layer of the anode, thereby providing a unit cell having a very thin second electrolyte layer. Therefore, the unit cell of Embodiment 6 can acquire better cell characteristics.

A method of manufacturing a unit cell having the second electrolyte layer provided on the anode has been described in conjunction with Embodiments 6 and 7. A similar method can be employed to manufacture a unit cell that has one second electrolyte layer on the anode and a unit cell that has two second electrolyte layers on the anode and the cathode, respectively.

### Industrial Applicability

The present invention can provide a fuel cell in which an electrolyte layer having ion conductivity is interposed between the anode and the cathode that are opposed to each other. The fuel cell can be used in a stationary power supply, an in-vehicle power supply or a portable power supply.

### [Advantage of the Invention]

The present invention can provide a fuel cell in which the permeation of oxygen from the cathode to the anode can be effectively prevented, thereby controlling the generation of hydrogen and preventing the degradation of the electrolyte membrane, and which can therefore maintain stable cell characteristics for a long time, and can also provide a method of manufacturing a fuel cell.

## Claims

1. A fuel cell having an anode, a cathode opposed to the anode, and an electrolyte member being arranged between the anode and the cathode and having ion conductivity,
**characterized in that** the electrolyte member comprises a plurality of electrolyte members, one of the electrolyte layers, which contacts at least one of the anode and the cathode, is a layer which prevents permeation of oxygen from the cathode to the anode and which contains catalyst.

2. A fuel cell having an anode, a cathode opposed to the anode, and an electrolyte member being arranged between the anode and the cathode and having ion conductivity,
**characterized in that** the electrolyte member is a two-layer unit composed of a first electrolyte member and a second electrolyte layer, the second electrolyte layer contacts the anode, and the second electrolyte layer is a layer which prevents permeation of oxygen from the cathode to the anode and which contains catalyst.

3. A fuel cell having an anode, a cathode opposed to the anode, and an electrolyte member arranged between the anode and the cathode and having ion conductivity,
**characterized in that** the electrolyte member is a two-layer unit composed of a first electrolyte layer and a second electrolyte member, the second electrolyte layer contacts the cathode, and the second electrolyte layer is a layer which prevents permeation of oxygen from the cathode to the anode and which contains catalyst.

4. A fuel cell having an anode, a cathode opposed to the anode, and an electrolyte member arranged between the anode and the cathode and having ion conductivity,
**characterized in that** the electrolyte member is a three-layer unit composed of a first electrolyte layer, a second electrolyte layer and a third electrolyte layer, said first electrolyte layer being interposed between the second and third electrolyte layers, the second electrolyte layer contacts the anode and the cathode and is a layer which prevents permeation of oxygen from the cathode to the anode and which contains catalyst.

5. The fuel cell according to any one of claims 1 to 4, **characterized in that** the electrolyte layer containing the catalyst or the second electrolyte layer contains material that is greatly hydrophilic and heat-resistant.

6. The fuel cell according to any one of claims 1 to 4, **characterized in that** the catalyst contained in the electrolyte layer containing catalyst or in the second electrolyte layer is supported by carbon.

7. The fuel cell according to any one of claims 1 to 4, **characterized in that** the catalyst contained in the electrolyte layer containing catalyst or in the second electrolyte layer is supported by oxide.

8. The fuel cell according to any one of claims 1 to 4, **characterized in that** the catalyst contained in the electrolyte layer containing catalyst or in the second electrolyte layer is a metal catalyst which contains at least one element selected from the group consisting of platinum, cobalt, palladium, gold, iridium, rhodium and ruthenium.

9. The fuel cell according to any one of claims 1 to 4, **characterized in that** the electrolyte layer or the first and second electrolyte layers is made of an ion-conducting resin which has at least one ion-conduction group selected from the group consisting of sulfonic group, carboxyl group and phosphoric group.

10. A method of manufacturing a fuel cell having an anode, a cathode opposed to the anode, and an electrolyte member being arranged between the anode and the cathode and having ion conductivity,
**characterized in that** the electrolyte member comprises a plurality of electrolyte layers, one of the electrolyte layers, which contacts at least one of the anode and the cathode, is a layer which prevents permeation of oxygen from the cathode to the anode, and the anode, the electrolyte layers and the cathode are hot-pressed together into one unit, thereby forming the electrolyte layers containing catalyst.

11. The method of manufacturing a fuel cell, according to claim 10, **characterized in that** the electrolyte layer containing the catalyst is formed on a resin sheet beforehand and is hot-pressed to the electrolyte layers other than the electrolyte layer which contains the catalyst.

12. The method of manufacturing a fuel cell, according to claim 10, **characterized in that** the electrolyte layer containing the catalyst is formed on a resin sheet beforehand and is hot-pressed to at least one of the anode and the cathode.

13. The method of manufacturing a fuel cell, according to claim 10, **characterized in that** the electrolyte layer containing the catalyst is formed by applying a polyelectrolyte solution to the electrolyte layer provided on at least one of the anode and the cathode or to any one of the electrolyte layers other than the electrolyte layer containing catalyst.
